# EUROPÄISCHE PATENTSCHRIFT

(11) **EP 0 655 021 B1**
(45) Veröffentlichungstag und Bekanntmachung des Hinweises auf die Patenterteilung: **25.09.1996**
(21) Anmeldenummer: 94908164.0
(22) Anmeldetag: 10.08.1993
(51) Int. Cl.: B23K 26/12, B23K 26/14

(54) **VERFAHREN ZUM LASERSTRAHLSCHNEIDEN VON BAND- ODER PLATTENFÖRMIGEN WERKSTÜCKEN, INSBESONDERE VON ELEKTROBLECH**
PROCESS FOR THE LASER BEAM CUTTING OF STRIP OR PLATE WORKPIECES, ESPECIALLY MAGNETIC STEEL SHEETS
PROCEDE DE DECOUPAGE AU LASER DE PIECES A USINER SE PRESENTANT SOUS FORME DE BANDES OU DE PLAQUES, NOTAMMENT DE TOLE ELECTRIQUE

(30) Priorität: 12.08.1992 DE 4226620
(43) Veröffentlichungstag der Anmeldung: 31.05.1995
(73) Patentinhaber: Thyssen Stahl Aktiengesellschaft, D-47166 Duisburg (DE)
(72) Erfinder: BEYER, Eckhard, D-52169 Roetgen-Rott (DE); PREISSIG, Kai-Uwe, D-44289 Dortmund (DE); PETRING, Dirk, NL-6462 HE Kerkrade (NL); BINGENER, Dieter, D-57223 Kreuztal (DE); RIEHN, Hans-Dieter, D-45966 Gladbeck (DE)
(74) Vertreter: Knauf, Rudolf, Dipl.-Ing.
(86) Internationale Anmeldenummer: EP9302123
(87) Internationale Veröffentlichungsnummer: WO9404306

(56) Entgegenhaltungen:
- EP-A- 0 440 397
- WO-A-88/01553
- FR-A- 2 366 910
- GB-A- 2 230 222
- VDI ZEITSCHRIFT Bd. 133, Nr. 6 , Juni 1991 , DUSSELDORF DE Seiten 46 - 56 XP237544 VON HARMUT ZEFFERER ET AL. 'Schmelzschneiden von hochlegierten Chrom-Nickel-Stählen mit CO2-Laserstrahlung'
- PATENT ABSTRACTS OF JAPAN vol. 13, no. 170 (M-817)21. April 1989 & JP,A,01 005 692 (MITSUBISHI ELECTRIC CORP) 10. Januar 1989
- PATENT ABSTRACTS OF JAPAN vol. 14, no. 177 (M-960)9. April 1990 & JP,A,02 030 389 (HAYASHI SEIISHI) 31. Januar 1990

## Beschreibung

Die Erfindung bezieht sich auf ein Verfahren zum Laserstrahlschneiden von band- oder plattenförmigen Werkstücken, insbesondere von Elektroblech mit einer Dicke von < 1 mm, insbesondere < 0,5 mm, bei dem ein von einer Laserstrahlquelle ausgehender Laserstrahl den Werkstoff unter Bildung einer Dampfkapillare an der Schnittstelle aufschmilzt und dabei die Schmelze von einem Wasserstoff enthaltenden inerten Schneidgas ausgetrieben wird.

Beim konventionellen Laserstrahlschneiden werden beispielsweise ein 1,5 kW CO₂-Laser und eine Standard-Fokussiereinrichtung verwendet, die zu Intensitäten des Fokussierbereichs von etwa 10⁶ W/cm² führen. Bei diesem Schneiden findet an der Schnittfront des Metalls eine Fresnelabsorption statt, bei der eine Verdampfung des Werkstoffes vernachlässigt werden kann.

Das Laserstrahlschneiden metallischer Werkstücke, insbesondere das Schneiden von rostfreiem Stahlblech mit einer Dicke von unter 1 mm, ist aus der DE 36 19 513 A1 bekannt. Das schneidaktive Gas im inerten Schneidgas ist Sauerstoff. Dieser Sauerstoff hat einen Anteil von 30 bis 90 Vol.-% des Schneidgases. Er soll der chemischen exothermen Reaktion mit dem Stahl zur Erzeugung von zusätzlicher Wärmeenergie dienen, um so den Schneidprozeß zu beschleunigen. Außerdem soll der Sauerstoff zusammen mit dem Schneidgas die im Schneidbereich entstehende Schmelze aus der Schnittfuge des Blechs austreiben. Es hat sich jedoch gezeigt, daß die Oxydationsprodukte nicht vollständig aus der Schnittfuge ausgetrieben werden, so daß keine von Oxidationsprodukten im wesentlichen freien Schnittkanten erhalten werden. Außerdem entsteht aufgrund der chemischen exothermen Reaktion eine vergleichsweise große Wärmeeinflußzone seitlich des Schnittbereichs, was zu einer Schädigung des Werkstückes, insbesondere eines Bleches und der sich gegebenenfalls darauf befindlichen Beschichtung führt.

Seit langem wird das Trennen von Elektroblechen als ein interessantes Anwendungsgebiet für das Laserschneiden angesehen. Bei einem bekannten Verfahren dieser Art (DE 27 43 544 A1) wird ein CO₂-Laser mit einer Leistung von einigen hundert Watt zum Schneiden von Elektroblech einer Dicke von unter 1 mm eingesetzt. Beim Laserstrahlschneiden wird das Werkstück an der Trennstelle aus einer Düse mit einem Sauerstoff enthaltenden Gas beaufschlagt, wobei der Druck vor der Düse über 5 bar beträgt. Bei diesem Schneiden können Schnittgeschwindigkeiten von knapp 10 m/min erreicht werden. Solche Schnittgeschwindigkeiten sind jedoch bei Elektroblech wirtschaftlich uninteressant. Darüber hinaus führen solche geringen Geschwindigkeiten wegen der damit verbundenen Erwärmung der der Schnittfuge benachbarten Zonen eines insbesondere kornorientierten Elektrobleches zu einer nicht gewünschten Beeinflussung seiner magnetischen Eigenschaften. Deshalb hält die Fachwelt den Einsatz von Hochleistungslasern, insbesondere eines CO₂-Lasers, bei dem das Werkstück vorzugsweise unter Verwendung von Sauerstoff und/oder Stickstoff als Schneidgas geschnitten werden soll, für das Trennen von Elektroblech, insbesondere kornorientiertem Elektroblech, für ungeeignet (Stahl und Eisen 110 (1990) Nr. 12, Seiten 147 - 153).

Anderweitig sind jedoch vielfältige Überlegungen und Experimente angestellt worden, um das Laserstrahlschneiden von Werkstücken mit größerer Geschwindigkeit durchführen zu können. Beispielsweise ist es aus WO 88/01553 bekannt, die Achse der Laserstrahlung, die von einer Düse zur Zuführung von Gas zur Schnittstelle umgeben ist, in bezug auf die Achse des Druckzentrums der Gasdüse zu versetzen, und zwar hin zum ungeschnittenen Blech. Dem liegt die Vorstellung zugrunde, daß das Material erst geschmolzen werden muß, um es dann an einer nachfolgenden Stelle besser aus der Schnittfuge austreiben zu können. Diese Art des Laserstrahlschneidens läßt sich jedoch nicht bei dünnen Blechen erfolgreich anwenden, wenn sie mit hohen Schnittgeschwindigkeiten geschnitten werden sollen.

Bei einem gerade bekannt gewordenen Verfahren zum Laserstrahlschneiden der eingangs genannten Art (DVS-Berichte 135, 1991, Seiten 12 bis 15) lassen sich bei optimal aufeinander abgestimmten Parametern, wie Strahlqualitätskennzahl K, Fokussierkennzahl F und fokussierte Intensität mit einem vorgegebenen Laserstrahltyp, vorzugsweise einem CO₂-Laser, Schnittgeschwindigkeiten von etwa 100 m/min bei einer Blechdicke von 0,25 mm und einer Fe-Legierung als Werkstoff erzielen. Dabei macht es keinen wesentlichen Unterschied, ob dem Schneidgas Wasserstoff beigemischt wird oder ob das Schneidgas primär aus Sauerstoff besteht, denn mit Sauerstoff wurden nur geringfügig größere Schnittgeschwindigkeiten erzielt.

Ferner ist ein Schneidverfahren bekannt (DE 39 34 920), bei dem mit einem Laserstrahl Schlitze geschnitten werden können, wobei das Schneiden unter Einsatz eines Luftstrahls oder Sauerstoffstrahls erfolgt, der vor dem Auftreffpunkt des Laserstrahls auf die Scheibe gerichtet ist. Mittels eines solchen, aus reaktivem Gas bestehenden Strahls lassen sich breite Schlitze herstellen und durch das Druckgas die Schmelze aus dem Schlitz austreiben. Ein solches Verfahren unterscheidet sich von dem erfindungsgemäßen Verfahren, daß mit einem inerten Schneidgas arbeitet, wegen des reaktiven Schneidgases grundsätzlich.

Bei einem Verfahren der eingangs genannten Art, das Gegenstand einer älteren Patentanmeldung (P 41 23 716.1-34) ist, ist vorgesehen, daß die zentrale Achse des Laserstrahls innerhalb eines auf das Werkstück gerichteten, Wasserstoff enthaltenden inerten Schneidgasstrahls liegt. Der Schneidgasstrahl ist zur Strahlachse des Laserstrahls in Schneidrichtung vorlaufend und so gerichtet, daß die Schmelze kontinuierlich aus der Schnittfuge ausgetrieben wird.

Der Erfindung liegt die Aufgabe zugrunde, das Verfahren der eingangs genannten Art für vorgegebene Werkstoffe und Werkstückdicken bezüglich der bisher maximal erzielbaren Schnittgeschwindigkeit zu verbessern, ohne daß eine Verminderung der Qualität der Schnittkanten in Kauf genommen werden muß.

Diese Aufgabe wird erfindungsgemäß dadurch gelöst, daß zur Aufrechterhaltung der Dampfkapillare der Wasserstoffanteil des Schneidgases derart hoch eingestellt wird und das den Laserstrahl umhüllende inerte Schneidgas der Oberfläche der Schmelze an der Schnittstelle mit einem solchen Druck und einer solchen Druckverteilung zugeführt wird, daß die Dampfkapillare unten geschlossen bleibt, die Tempertur an der Oberfläche der Schmelze auf Verdampfungstemperatur gehalten und die Schmelze kontinuierlich auf der der Schneidrichtung abgewandten Seite der Dampfkapillare aus der Schnittfuge ausgetrieben wird.

Für die Erfindung ist die Erkenntnis von Bedeutung, daß die Grenzen der klassischen Fresnelabsorption für die Laserstrahlung durch die notwendige hohe Intensität überschritten werden. Durch partielle Verdampfung in Verbindung mit modifizierter Wechselwirkungsgeometrie bilden sich ein Plasma, das zur Abschirmung der Laserstrahlung führen kann, und eine Dampfkapillare. Die Dampfkapillare wird nach der Erfindung genutzt, um zu höheren Schnittgeschwindigkeiten zu kommen. Es ergibt sich nämlich ein Schmelzfluß im Schnittbereich parallel zur Werkstückoberfläche um die Dampfkapillare herum und ein Schmelzaustrieb hinter der Dampfkapillare aus der Schnittfuge nach unten. Das allein reicht allerdings nicht aus, denn bei falscher Prozeßführung kann dies zu einem Stau der Schmelze führen, verbunden mit der Gefahr der Überhitzung der Schmelze und der dieser benachbarten Randzonen der Schnittfuge sowie einer Verbreiterung der Schnittfuge. Diese Erscheinungen können dazu führen, daß die gewünschten Geschwindigkeitssteigerungen nicht oder jedenfalls zu einem erheblichen Teil nicht erreicht werden.

Da erfindungsgemäß neben der Einstellung des Druckes des Schneidgasgemisches Wasserstoff mit einem möglichst hohen Anteil zum Schneidgas beigemischt wird, können die vorbeschriebenen unerwünschten Erscheinungen begrenzt werden. Es entsteht zwar auch ein durch Verdampfung des Werkstoffes bedingtes Plasma, doch wird eine abschirmende Wirkung des Plasmas in bezug auf die Laserstrahlung praktisch vermieden, und vor allem treten auch keine Behinderungen des Austriebs der Schmelze auf. Wasserstoff hat nämlich eine durch seine leichten Moleküle bedingte kühlende Wirkung, z.B. durch erhöhte Rekombinationsrate per Dreierstoß (Elektron-Ion-Wasserstoff), so daß die Gefahr der Überhitzung der Schmelze, des verdampften Werkstoffs und des sich ausbildenden Plasmas vermieden werden kann. Ferner ist von Bedeutung, daß die Oberflächenspannung der Schmelze durch den Wasserstoff verringert wird, was dem Aufstauen der Schmelze und einer damit verbundenen Behinderung des Austriebs der Schmelze entgegenwirkt.

Mit dem erfindungsgemäßen Verfahren werden deshalb bei gegenüber dem Stand der Technik weiter erhöhten Schnittgeschwindigkeiten gratfreie Schnittkanten und eine geringstmögliche Beeinflussung der an den Schnittkanten angrenzenden Zonen des zu trennenden Materials erzielt, was insbesondere für kornorientiertes Elektroblech von Bedeutung ist.

Im vorbeschriebenen Sinne ist es vorteilhaft, wenn Wasserstoff bis zu max. 25 Vol.-% im Schneidgas enthalten ist. Es konnten Geschwindigkeitssteigerungen von ca. 15% gegenüber dem Stand der Technik gemäß dem genannten DVS-Bericht erreicht werden.

Geeignete Drücke für das inerte Schneidgas bei einem CO₂-Laser liegen zwischen 3 bar und 8 bar. Bei einem Nd:YAG-Laser ist es vorteilhaft, wesentlich höhere Drücke, und zwar bis zu 50 bar, anzuwenden.

Empfehlenswert ist es, daß als inertes Schneidgas Stickstoff oder Argon verwendet wird. Es sind dies industriell verfügbare preiswerte Gase. Während sich Stickstoff in der Regel besonders für Werkstücke aus Eisenmetallen eignet, kann Argon schwerpunktmäßig bei Nichteisenmetallen vorteilhaftes Inertverhalten zeigen.

Nach einer weiteren Ausgestaltung der Erfindung, die bei einer großen Wechselwirkungsfläche der Laserstrahlung mit dem Werkstück die Herstellung einer schmalen Schnittfuge erlaubt, ist vorgesehen, daß der Laserstrahl auf einem ovalen Brennfleck mit in Schneidrichtung verlaufender Hauptachse fokussiert ist. Hiermit wird die Intensität der Laserstrahlung bezogen auf die Schnittfront verringert und damit eine unerwünschte starke Verdampfung des Werkstoffes mit entsprechend starker Plasmabildung vermieden. Weiter wirkt sich günstig für die hohe Schnittgeschwindigkeit aus, wenn der fokussierte Brennfleck des Laserstrahls auf halber Höhe des Werkstückes, in der Mitte der Werkstückdicke, gehalten wird.

Nach einer Ausgestaltung der Erfindung wird das inerte Schneidgas exzentrisch zur Laserstrahlachse geführt und trifft vorlaufend auf die Schnittstelle auf. Weiter ist von Vorteil, wenn das inerte Schneidgas unter einem Winkel < 90° auf die Schnittstelle auftrifft. Allen Ausgestaltungen ist gemeinsam, daß das Druckzentrum des inerten Schneidgases zum ungeschnittenen Werkstück hin verlegt ist. Infolge dieser Einstellung entsteht beim Eintritt des Gasstrahls in die Schnittfuge ein transversaler Druckgradient. Dieser bedingt einen Strömungsanteil in Richtung der Längserstreckung der offenen Schnittfuge, so daß ein schnellerer Abtransport der Schmelze und des Dampfes aus dem Wechselwirkungsbereich der Laserstrahlung mit dem Werkstoff des Blechs, wie auch eine geringere Verdampfung erreicht wird. Beim Austritt der Schmelze wirken die Verringerung der Oberflächenspannung der Schmelze durch den Wasserstoff des Schneidgases und der transversale Druckgradient des Schneidgases zusammen, um den Austritt der Schmelze zu beschleunigen.

Um die Laserstrahlung möglichst stark fokussieren zu können, wird eine Laserstrahlung niedriger Modenordnung gewählt, d.h. eine möglichst große Strahlqualitätskennzahl K von vorzugsweise > 0,5.

Um das Austreiben der Schmelze aus der Schnittfuge auf der der Schneidrichtung abgewandten Seite der Dampfkapillare zu unterstützen, kann zusätzlich ein gasförmiger, flüssiger oder aus Partikeln bestehender Zusatz-Strahl angewendet werden.

Die Erfindung wird anhand der Zeichnung erläutert. Es zeigt:
- Fig. 1: eine Laserstrahlschneidvorrichtung in perspektivischer, schematischer Darstellung und
- Fig. 2: einen Längsschnitt durch den Schneidbereich eines Werkstückes der Dicke d in schematischer Darstellung.

Eine Schneidvorrichtung 25 mit einem Laserstrahl 21 wird über ein Werkstück 10 geführt, wobei die Laserstrahlung 11 mit einer Fokussieroptik 12 fokussiert ist. Die fokussierte Laserstrahlung 11 ist auf das als Blech dargestellte Werkstück 10 gerichtet, das eine Dicke d hat. Wenn das Blech 10 in Richtung eines Pfeils 22 gegenüber der Schneidvorrichtung 25 bewegt wird, erzeugt der Laserstrahl 11 im Blech eine Schnittfuge 16.

Die Schnittgeschwindigkeiten betragen z.B. bei Blechen von unter 1 mm bis zu 250 m/min und mehr. Die Schneidvorrichtung 25 kann beispielsweise in Längs- und/oder Querteilanlagen sowie in Besäumanlagen angewendet werden, wo das Blech z.B. vom Coil abgewickelt wird.

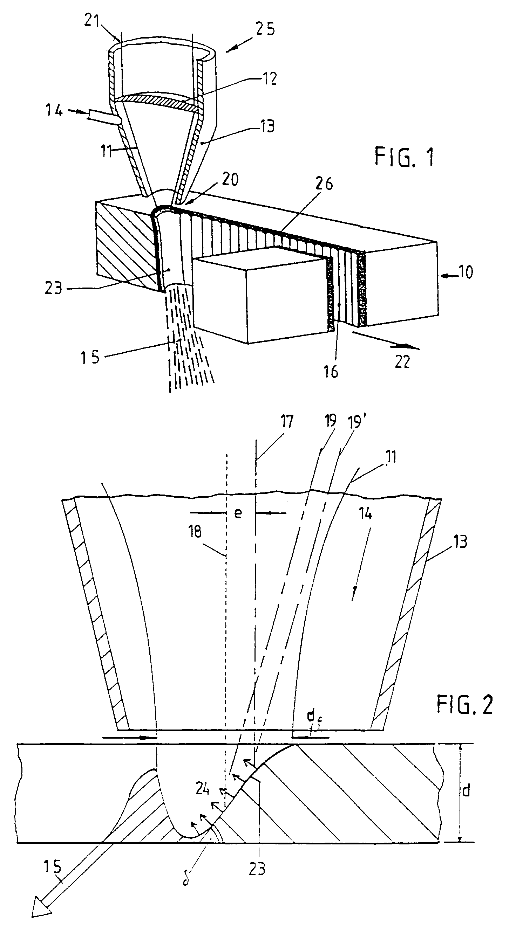

Die Fokussieroptik 12 weist eine Fokussierlinse auf, mit der die Laserstrahlung 11 so fokussiert ist, daß der Fokus im Bereich der halben Blechdicke d liegt, vgl. Fig. 2. In Anbetracht der dünnen Bleche, die es zu schneiden gilt, und vor allem wegen der erwünschten schmalen Schnittfuge 16 soll die Fokussierung möglichst stark, der Fokus also möglichst klein sein. Das kann u.a. erreicht werden, indem die Laserstrahlung eine möglichst niedrige Modenordnung aufweist.

Der Laserstrahl 21 ist von einer Gasdüse 13 für das Schneidgas 14 umgeben. Das Schneidgas 14 trifft in Richtung der Laserstrahlung 11 auf den Schneidbereich 20 des Blechs 10. Es besteht aus einem Inertgas, wie Stickstoff oder Argon, welches vornehmlich dem Austrieb der Schmelze 15 dient, die beim Schneiden durch die Laserstrahlung 11 erzeugt wird. Außerdem ist dem Schneidgas Wasserstoff beigemischt, dessen Wirkung weiter unten beschrieben wird.

Beim Schneiden mit Geschwindigkeiten, die dem heutigen Stand der Technik entsprechen, entsteht eine Schnittfront 23 gemäß Fig. 1, von der aus der Austrieb der Schmelze 15 unmittelbar erfolgt. Optimale Bedingungen für hohe Schnittgeschwindigkeiten mit geringstmöglicher Wärmebeanspruchung der an der Schneidfuge 16 angrenzenden Bereiche 26 und oxidationsfreie Schnittkanten 16 lassen sich damit nicht erreichen. Erst durch den Einsatz der erfindungsgemäßen Maßnahmen ist ein Übergang zu höheren Schnittgeschwindigkeiten möglich, bei der sich dann die Schnittfuge unten verschließt, d.h. daß die Schmelze zunächst bei Ausbildung einer Dampfkapillare in der Fuge verbleibt, wie in Fig. 2 dargestellt. Die Bildung und Aufrechterhaltung der Dampfkapillare ermöglicht es, daß die Schmelze vergleichsweise sehr flüssig bleibt. Mit der höheren Energieeinkopplung durch die so gebildete Dampfkapillare lassen sich höhere Schnittgeschwindigkeiten erzielen, und dadurch eine geringere Wärmebeanspruchung der Nachbarzonen 26 und der oxidationsfreien Schnittkanten. Figur 2 zeigt weiter, daß bei dem erfindungsgemäßen Verfahren die Schnittfront 23 wesentlich flacher liegt, nämlich mit einem Winkel von beispielsweise 65-75°, im Vergleich zum herkömmlichen Schneiden mit reiner bzw. praktisch ausschließlicher Fresnelabsorption, wo der Winkel nahe 90° ist, die Schnittfront 23 also sehr steil verläuft. Die flache Schnittfront 23 erklärt sich bei dünnen Blechen mit dem hohen Verhältnis aus Fokusdurchmesser d_{f} und Blechdicke d, und zwar trotz der größeren Strahlintensität bzw. der stärkeren Fokussierung. Bei herkömmlichem Schneiden von zum Beispiel 3 mm dicken Blechen mit Fokusdurchmesser d_{f}=3/10 mm ergibt sich ein auf die Blechdicke d bezogenes Verhältnis von 1:10. Trotz höherer Strahlintensität infolge stärkerer Fokussierung auf zum Beispiel 6/100 mm ergibt sich bei einer Blechdicke von 0,2 mm ein Verhältnis von 3:10, so daß die Schnittfront bei maximaler Schnittgeschwindigkeit also flacher liegen muß, um den Laserstrahl vollständig einzukoppeln. Das bedeutet eine größere Wechselwirkungsfläche. Außerdem ergibt sich ein vergleichsweise großer Stau der Schmelze, da aufgrund der hohen Schnittgeschwindigkeit ein großer Volumenstrom gegeben ist und die maximale Geschwindigkeit der Schmelzeströmung begrenzt ist. U.a. deswegen erfolgt in Richtung der Pfeile 24 der Fig. 2 ein verstärktes Verdampfen des Blechwerkstoffs. Zusammen mit der flacheren Schnittfront 23 verringert sich also die Strömungsgeschwindigkeit der Schmelze 15 bei ihrem Austrieb, und die Metallverdampfungsrate steigt an, so daß bei den hohen Laserintensitäten ein abschirmendes Metalldampfplasma entstehen kann. Beides wird durch die Beimischung von Wasserstoff zum inerten Schneidgas vermieden. Der Wasserstoff bewirkt, daß die Oberflächenspannung der Schmelze verringert wird, so daß diese schneller ausgeblasen werden kann und damit Schmelzfilmdicke, Oberflächentemperatur und Verdampfungsrate sinken. Diesem Umstand kommt erhebliche Bedeutung zu, wenn beachtet wird, daß die Schnittfuge 16 zwar schmal und das Blech dünn ist, der auszutreibende Massenstrom (Masse pro Zeiteinheit) infolge der hohen Schnittgeschwindigkeit insgesamt jedoch sehr groß ist. Außerdem kühlen die leichten Moleküle des Wasserstoffs das Plasma und wirken so der Entstehung eines abschirmenden Metalldampfplasmas entgegen. Dadurch wird neben der Erhöhung der maximalen Schnittgeschwindigkeit auch die Stabilität des Schneidprozesses erhöht, was sich entsprechend positiv auf die Schnittqualität auswirkt.

In Fig. 2 ist die Laserstrahlung 11 mit einem im Bereich der Blechdicke d liegenden Fokus des Durchmessers d_{f} dargestellt. Die zugehörige Achse der Laserstrahlung 11 ist mit 18 gekennzeichnet. Die Gasdüse 13 ist ebenfalls rotationssymmetrisch ausgebildet, und ihre Achse ist mit 17 bezeichnet. Die Achse 17 ist hier ein Synonym für das Druckzentrum des Schneidgases 14, welches dem Schneidbereich 20 wie aus Fig. 1 ersichtlich zugeführt wird.

Bei der relativen Zuordnung der Gasdüse 13 und der Laserstrahlung 11 ist beachtenswert, daß die Achse 17 der Gasdüse 13 in bezug auf die Achse 18 der Laserstrahlung 11 mit einer Exzentrizität e angeordnet ist, und zwar in Richtung auf das ungeschnittene Blech 10 versetzt. Als Folge dieser vorlaufenden Düsenjustierung entsteht beim Eintritt des Schneidgases 14 in die Schnittfuge 16 ein transversaler Druckgradient in Längsrichtung der offenen Schnittfuge, also senkrecht zur Achse 18. Infolgedessen wird auf den entstehenden Metalldampf so Einfluß genommen, daß eine abschirmende Wirkung des Metalldampfplasmas vermieden werden kann. Außerdem wird die Schmelze in Richtung der vergleichsweise flachen Schnittfront 23 schneller abtransportiert. Obwohl also der Austriebsweg infolge der flacher liegenden Schnittfront 23 länger ist als bei steilerer Schnittfront, ergibt sich durch die Zusammenwirkung des die Oberflächenspannung der Schmelze verringernden Wasserstoffs mit der verbesserten transversalen Führung des Schneidgases ein verbesserter Austrieb der Schmelze 15.

Aus Fig. 2 ist ersichtlich, daß die Erzielung eines transversalen Druckgradienten des Schneidgases auch dadurch erreicht werden kann, daß die Gasdüse 13 mit zum Blech 10 geneigten Achsen 19 oder 19' angeordnet ist. Die Neigung und Anordnung der Achsen 19, 19' bestimmt in Verbindung mit der Neigung der Schnittfront 23 die Größe des transversalen Druckgradienten. Unterschiedlich ist bei der Anordnung der Achsen 19, 19', daß die Achse 19 die Schnittfront im Bereich der Achse 18 im Schneidbereich 20 schneidet, während die Achse 19' in Richtung des ungeschnittenen Blechs 10 vor dem vorgenannten Schnittpunkt liegt. Das Schneidgas 14 trifft auf die Schnittfront 23 und/oder auf das ungeschnittene Blech 10.

In Fig. 2 ist die Laserstrahlung 11 mit einem Fokus des Durchmessers d_{f} dargestellt. Der Strahlquerschnitt ist also kreisförmig. Die Laserstrahlung 11 kann aber auch vorzugsweise elliptisch bzw. länglich fokussiert sein. In diesem Falle ist d_{f} die Länge der großen Halbachse der Ellipse, wobei diese in Schneidrichtung angeordnet ist. Infolgedessen wird die Intensität der Laserstrahlung auf der flachen Schnittfront verringert und damit die Wechselwirkungsfläche beim Einkoppeln der Laserstrahlung in das Blech vergrößert. Dadurch kann der Schneidprozeß stabilisiert werden, weil die Plasmabildung und der Schmelzeaustrieb besser kontrolliert werden können. Zugleich kann die Breite des Laserfokus klein gehalten werden und dementsprechend die Breite der Schnittfuge 16.

Mit dem erfindungsgemäßen Verfahren können Schnittgeschwindigkeiten von mehr als 100 m/min, vorzugsweise bis zu 250 m/min und mehr, bei oxidationsfreier Schnittkante erreicht werden. Aufgrund der hohen Schnittgeschwindigkeit ist die nachteilige Wärmebeeinflussung der Randzonen der Schnittfuge gering, was bei kornorientierten Elektroblechen besonders wichtig ist.

## Patentansprüche

1. Verfahren zum Laserstrahlschneiden von band- oder plattenförmigen Werkstücken, insbesondere von Elektroblech mit einer Dicke von < 1 mm, insbesondere < 0,5 mm, bei dem ein von einer Laserstrahlquelle ausgehender Laserstrahl den Werkstoff unter Bildung einer Dampfkapillare an der Schnittstelle aufschmilzt und dabei die Schmelze von einem Wasserstoff enthaltenden inerten Schneidgas ausgetrieben wird, **dadurch gekennzeichnet,** daß zur Aufrechterhaltung der Dampfkapillare der Wasserstoffanteil des Schneidgases derart hoch eingestellt wird und das den Laserstrahl umhüllende inerte Schneidgas der Oberfläche der Schmelze an der Schnittstelle mit einem solchen Druck und einer solchen Druckverteilung zugeführt wird, daß die Dampfkapillare unten geschlossen bleibt, die Temperatur an der Oberfläche der Schmelze auf Verdampfungstemperatur gehalten und die Schmelze kontinuierlich auf der der Schneidrichtung abgewandten Seite der Dampfkapillare aus der Schnittfuge ausgetrieben wird.

2. Verfahren nach Anspruch 1, **dadurch gekennzeichnet,** daß das Schneidgas einen Anteil von bis zu 25 Vol.-% Wasserstoff enthält.

3. Verfahren nach Anspruche 1 oder 2, **dadurch gekennzeichnet,** daß bei einem CO₂-Laser als Laserstrahlquelle der Druck des Schneidgasgemisches zwischen 3 bar und 8 bar eingestellt wird.

4. Verfahren nach einem der Ansprüche 1 bis 3, **dadurch gekennzeichnet,** daß bei einem Nd:YAG-Laser als Laserstrahlquelle der Druck des Schneidgasgemisches auf bis zu 50 bar eingestellt wird.

5. Verfahren nach einem der Ansprüche 1 bis 4, **dadurch gekennzeichnet,** daß das Schneidgas Stickstoff oder Argon ist.

6. Verfahren nach einem der Ansprüche 1 bis 5, **dadurch gekennzeichnet,** daß das Schneidgas exzentrisch zur Laserstrahlachse geführt wird und vorlaufend auf die Schnittstelle auftrifft.

7. Verfahren nach einem der Ansprüche 1 bis 6, **dadurch gekennzeichnet,** daß das Schneidgas unter einem Winkel < 90° auf die Schnittstelle auftrifft.

8. Verfahren nach einem der Ansprüche 1 bis 7, **dadurch gekennzeichnet,** daß der Laserstrahl auf einen ovalen Brennfleck mit in Schneidrichtung verlaufender Hauptachse fokussiert ist.

9. Verfahren nach einem der Ansprüche 1 bis 8, **dadurch gekennzeichnet,** daß der fokussierte Brennfleck des Laserstrahls auf halber Höhe des Werkstückes gehalten wird.

10. Verfahren nach einem der Ansprüche 1 bis 9, **dadurch gekennzeichnet,** daß der von einer Laserstrahlquelle ausgehende Laserstrahl von niedriger Modenordnung ist.

11. Verfahren nach einem der Ansprüche 1 bis 10, **dadurch gekennzeichnet,** daß die Schmelze aus der Schnittfuge hinter der Dampfkapillare zusätzlich mit einem gasförmigen, flüssigen oder aus Partikeln bestehenden Zusatz-Strahl ausgetrieben wird.

## Claims

1. A process for the laser beam cutting of strip-shaped or sheet-shaped workpieces, more particularly electric quality sheet having a thickness of < 1 mm, more particularly < 0.5 mm, wherein a laser beam emitted from a laser beam source connects the material at the cutting place with the formation of a vapour capillary, the melt being expelled by a hydrogen-containing inert cutting gas, characterized in that to maintain the vapour capillary, the hydrogen component of the cutting gas is adjusted through such a level, and the inert cutting gas enclosing the laser beam is supplied to the surface of the melt at the cutting place at a pressure such and a pressure distribution such that the vapour capillary remains closed at the bottom, the temperature at the surface of the melt is maintained at evaporating temperature and the melt is continuously expelled from the cutting joint on the side of the vapour capillary remote from the cutting direction.

2. A process according to claim 1, characterized in that the cutting gas contains a proportion of up to 25% by volume hydrogen.

3. A process according to claims 1 or 2, characterized in that if the laser beam source used is a CO₂ laser, the pressure of the cutting gas mixture is adjusted between 3 bar and 8 bar.

4. A process according to one of claims 1 to 3, characterized in that if the laser beam source used is an Nd:YAG laser, the pressure of the cutting gas mixture is adjusted to up to 50 bar.

5. A process according to one of claims 1 to 4, characterized in that the cutting gas is nitrogen or argon.

6. A process according to one of claims 1 to 5, characterized in that the cutting gas is guided eccentrically of the laser beam axis and impinges with a lead on the cutting place.

7. A process according to one of claims 1 to 6, characterized in that the cutting gas impinges on the cutting place at an angle of < 90°.

8. A process according to one of claims 1 to 7, characterized in that the laser beam is focused on an oval focal spot with main axis extending in the cutting direction.

9. A process according to one of claims 1 to 8, characterized in that the focused focal spot of the laser beam is maintained at half the height of the workpiece.

10. A process according to one of claims 1 to 9, characterized in that the laser beam emitted from a laser beam source is of low mode order.

11. A process according to one of claims 1 to 10, characterized in that the melt is also expelled from the cutting joint downstream of the vapour capillary by an additional gaseous, liquid or particulate beam.

## Revendications

1. Procédé de coupage au laser de pièces en forme de bande ou de plaque, en particulier de tôles électriques ayant une épaisseur inférieure à 1 mm, en particulier inférieure à 0,5 mm, dans lequel un faisceau laser provenant d'une source de faisceau laser fait fondre le matériau de la pièce, à l'emplacement de coupe, en donnant naissance à un capillaire formé par la vapeur, et la matière en fusion est expulsée par un gaz de coupe inerte contenant de l'hydrogène, caractérisé en ce que, pour maintenir le capillaire formé par la vapeur, la teneur en hydrogène du gaz de coupe est réglée à une valeur telle, et le gaz de coupe inerte entourant le faisceau laser est envoyé sur la surface du bain de fusion, à l'emplacement de coupe, avec une pression et une répartition de pression telles, que le capillaire formé par la vapeur reste fermé vers le bas, la température à la surface de la matière en fusion est maintenue à la température de vaporisation, et la matière en fusion est continuellement expulsée, à travers la fente de coupe, du côté du capillaire formé par la vapeur qui est opposé au sens de coupe.

2. Procédé suivant la revendication 1, caractérisé en ce que le gaz de coupe contient une proportion d'hydrogène allant jusqu'à 25% en volume.

3. Procédé suivant la revendication 1 ou 2, caractérisé en ce que, dans le cas où la source de faisceau laser est un laser CO_{2,} la pression du mélange de gaz de coupe est réglée entre 3 bars et 8 bars.

4. Procédé suivant l'une des revendications 1 à 3, caractérisé en ce que, dans le cas où la source de faisceau laser est un laser Nd : YAG, la pression du mélange de gaz de coupe est réglée à une valeur allant jusqu'à 50 bars.

5. Procédé suivant l'une des revendications 1 à 4, caractérisé en ce que le gaz de coupe est de l'azote ou de l'argon.

6. Procédé suivant l'une des revendications 1 à 5, caractérisé en ce que le gaz de coupe est guidé excentriquement par rapport à l'axe du faisceau laser et arrive en avance sur l'emplacement de coupe.

7. Procédé suivant l'une des revendications 1 à 6, caractérisé en ce que le gaz de coupe arrive à l'emplacement de coupe sous un angle inférieur à 90°.

8. Procédé suivant l'une des revendications 1 à 7, caractérisé en ce que le faisceau laser est focalisé en une tache de combustion ovale ayant un axe principal qui s'étend dans la direction de coupe.

9. Procédé suivant l'une des revendications 1 à 8, caractérisé en ce que la tache de combustion focalisée du faisceau laser est maintenue à mi-hauteur de la pièce.

10. Procédé suivant l'une des revendications 1 à 9, caractérisé en ce que le faisceau laser partant d'une source de faisceau laser à un ordre de modes faible.

11. Procédé suivant l'une des revendications 1 à 10, caractérisé en ce que la matière en fusion est en outre expulsée de la fente de coupe, derrière le capillaire formé par la vapeur, par un jet auxiliaire gazeux, liquide ou constitué de particules.
